Europäisches Patentamt

European Patent Office

Office européen des brevets

(19)

(11) veröffentlichungsnummer: **0 016 414**
A2

(12) **EUROPÄISCHE PATENTANMELDUNG**

(21) Anmeldenummer: **80101280.8**

(22) Anmeldetag: **12.03.80**

(51) Int. Cl.³: **G 01 N 27/46**

(30) Priorität: **21.03.79 DE 2911151**

(43) Veröffentlichungstag der Anmeldung:
**01.10.80 Patentblatt 80/20**

(84) Benannte Vertragsstaaten:
**BE FR GB NL**

(71) Anmelder: **SIEMENS AKTIENGESELLSCHAFT Berlin
und München**
**Postfach 22 02 61**
**D-8000 München 22(DE)**

(72) Erfinder: **De Steur, Hubert, Ing. grad.**
**Spoorwegstraat 11**
**B-9810 Drongen(BE)**

(54) **Schaltungsanordnung für eine amperometrische Titration.**

(57) Bei der amperometrischen Titration wird in Abhängigkeit vom Gesamtvolumen des in Volumeneinheiten zugegebenen Titriermittels der Strom zwischen einer Arbeits- und einer Gegenelektrode (2 bzw4) gemessen. Die Arbeitselektrode (2) wird mit einer konstanten Polarisationsspannung gegen eine Referenzelektrode (3) betrieben. Zur Konstanthaltung der zwischen Arbeits- und Referenzelektrode (2 bzw. 3) vorgegebenen Polaritätsspannung ist ein Regelkreis vorgegeben, wobei die von einem Sollwertgeber (10) vorgegebene Sollwertspannung mit der zwischen Arbeits- und Referenzelektrode (2 bzw. 3) hochohmig erfaßten Istwertspannung (11) verglichen wird.

FIG 1

SIEMENS AKTIENGESELLSCHAFT          Unser Zeichen
Berlin und München                  VPA
                                    79 P 7 3 0 7

Schaltungsanordnung für eine amperometrische Titration

Die Erfindung bezieht sich auf eine Schaltungsanordnung für eine amperometrische Titration zur Bestimmung des Endpunktes, bei der der Strom zwischen einer Arbeits- und einer Gegenelektrode in Abhängigkeit vom Gesamtvolumen des in Volumeinheiten zugegebenen Titriermittels gemessen wird, wobei die Arbeitselektrode mit einer konstanten Polarisationsspannung gegen eine Referenzelektrode betrieben wird und zur Konstanthaltung der zwischen Arbeits- und Referenzelektrode vorgegebenen Polarisationsspannung ein Regelkreis vorgesehen ist, wobei eine vorgegebene Sollwertspannung mit der zwischen Arbeits- und Referenzelektrode erfaßten Istwertspannung verglichen wird.

Eine nach diesem Prinzip arbeitende Meßschaltung ist beispielsweise in dem Buch "Grundlagen der technischen Elektrochemie" von Heitz/Kreysa, Verlag Chemie Weinheim/New York, 1971, S. 6 und 7 angegeben. Hierbei wird mittels eines elektronischen Potentiostaten an die Arbeits-

Hs 1 Kow / 8.3.1979

elektrode ein konstantes Potential gegenüber der Referenzelektrode angelegt und mit Hilfe eines Milliamperemeters der Strom gemessen. Über einen Regelkreis wird der Strom so gesteuert, daß die Differenz zwischen einer vorgegebenen Sollwertspannung und dem Potential zwischen Arbeits- und Referenzelektrode ein Minimum wird. Diese bekannte Meßschaltung arbeitet nicht nur nicht mit der für eine Titration ausreichenden Genauigkeit, sondern ist auch für die Automatisierung einer amperometrischen Titration zur Bestimmung des Endpunktes nicht geeignet, da sie keine dem Strom proportionale Größe abzugeben in der Lage ist.

Der Erfindung liegt die Aufgabe zugrunde, eine Schaltungsanordnung der eingangs beschriebenen Art zu schaffen, die für eine amperometrische Titration hinreichend genau arbeitet, und die sich ohne weiteres mit einem automatischen Auswerteverfahren zur Bestimmung des Titrationsendpunktes kombinieren läßt. Diese Aufgabe wird gemäß der Erfindung dadurch gelöst, daß die Sollwertspannung mit Hilfe eines Sollwertgebers vorgegeben wird, die Istwertspannung mit Hilfe eines Impedanzwandlers hochohmig erfaßt wird und die Sollwert-Istwert-Abweichung über einen Summier-Inte-grator kompensiert wird. Vorzugsweise besteht der Soll-wertgeber aus einem mit einer Zenerdiode stabilisierten Spannungswandler. Dadurch ist die Möglichkeit gegeben, daß die Sollwertspannung den jeweiligen Verhältnissen leicht angepaßt werden kann, wobei gewährleistet ist, daß während der amperometrischen Titration die Spannung zwischen Arbeitselektrode und Referenzelektrode hinreichend konstant gehalten wird.

Die Ausgangsspannung des Summier-Integrators wird über einen als Spannungswandler dienenden Widerstand an die Gegenelektrode angelegt, wobei die am Spannungswandler auftretenden Potentiale hochohmig gemessen und die Potentialdifferenz mittels eines Differentiators gebildet wird. Diese Potentialdifferenz ist exakt proportional
dem Strom im Elektrodenmeßsystem. Das Ausgangssignal
des Differentiators kann unmittelbar einer Auswerteeinrichtung zur Bestimmung des Endpunktes zugeführt
werden.

Anhand der Zeichnung, in der ein Ausführungsbeispiel dargestellt ist, wird die Erfindung näher erläutert. Es
zeigen:

Figur 1 eine prinzipielle Geräteanordnung für eine amperometrische Titration,
Figur 2 eine Schaltungsanordnung gemäß der Erfindung und
Figur 3 eine    Stromversorgung für den Meß- und Regelkreis gemäß Figur 2.

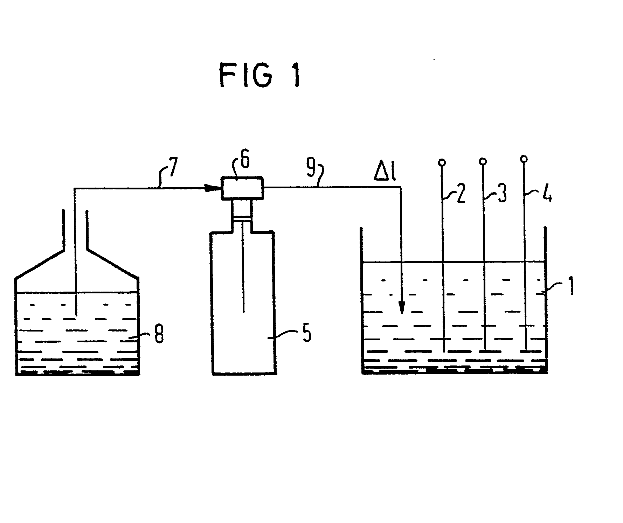

In Figur 1 ist mit 1 ein Titrationsgefäß bezeichnet, in das
eine Arbeitselektrode 2, eine Referenzelektrode 3 und eine
Gegenelektrode 4 eintauchen. Mit Hilfe einer Motorkolbenbürette 5, auf der ein steuerbares Ventil 6 aufgesetzt
ist, wird über eine Leitung 7 ein geeignetes Titriermittel angesaugt, welches sich in einem Behälter 8 befindet, und über eine Leitung 9 an das Titrationsgefäß 1
in Volumeneinheiten $\Delta$ l abgegeben. Sobald der Titrationsendpunkt bestimmt ist, wird die Motorkolbenbürette 5
stillgesetzt und das Ventil 6 geschlossen.

In Figur 1 sind also nur die Teile dargestellt, die für
eine amperometrische Titration von Bedeutung sind, nicht
aber eine Probenentnahme, zusätzliche Zugaben, insbesondere
destilliertes Wasser zur Verdünnung.

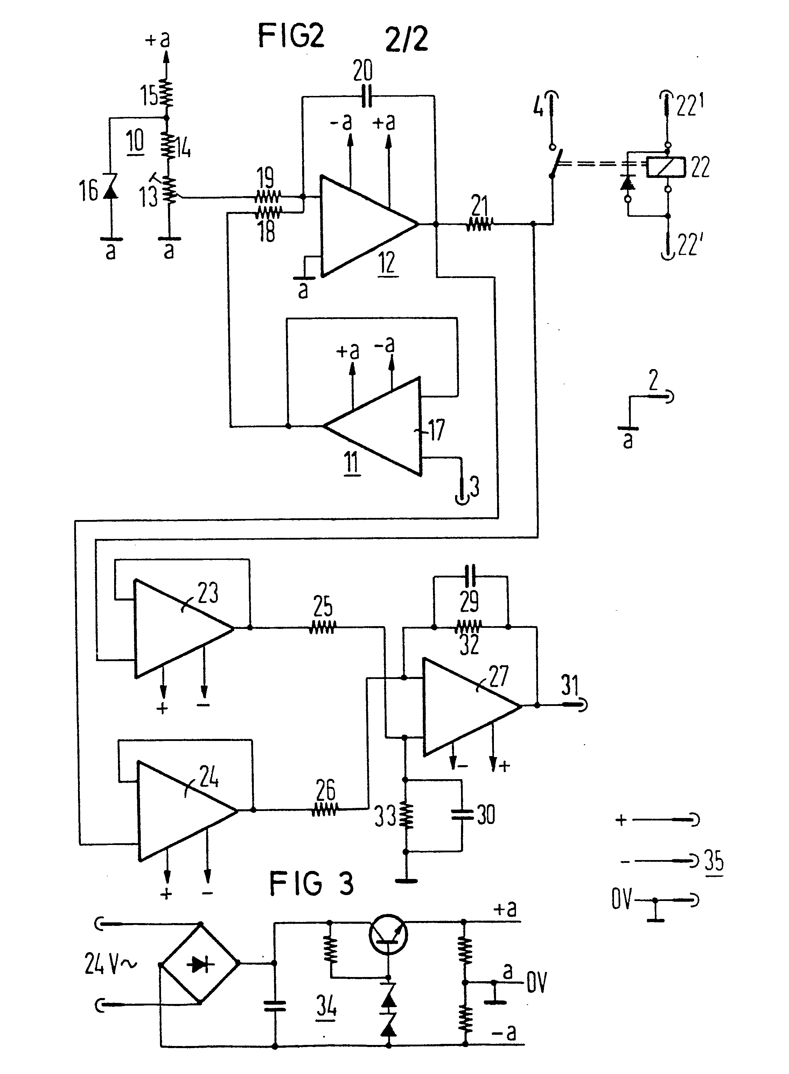

Die erfindungsgemäße Schaltungsanordnung ist in Figur 2
dargestellt. Sie enthält einen Regelkreis bestehend aus
einem Sollwertgeber 10, einem Istwertgeber 11 und einem
Summier-Integrator 12. Der Sollwertgeber besteht aus einem Spannungsteiler mit den Widerständen 13 bis 15, wobei der Widerstand 13 zur Sollwertvorgabe einstellbar ist. Zur Spannungskonstanthaltung ist den Widerständen 13 und 14 eine Zenerdiode 16 parallel geschaltet. Wie aus der Zeichnung ersichtlich, liegt die Arbeitselektrode 2 an Masse a, an die auch die Zenerdiode 16 und der Widerstand 13 angeschlossen sind. An dem Widerstand 13, welcher niederohmig ist, wird gegen die Arbeitselektrode 2 (Masse a) der Sollwert der Polarisationsspannung gegen die Referenzelektrode 3 eingestellt.

Der Istwert der Polarisationsspannung wird mit Hilfe eines Impedanzwandlers 17 hochohmig an der Referenzelektrode 3 abgegriffen und über einen Widerstand 18 an den invertierenden Eingang des Summier-Integrators 12 angelegt, welchem die Sollwertspannung über einen Widerstand 19 zugeführt wird. Der nicht invertierende Eingang des Summier-Integrators 12 ist hierbei an Masse a gelegt. Der Ausgang des Summier-Integrators 12 ist mit dem invertierenden Eingang über einen Kondensator 20 verbunden. Durch entsprechende Bemessung des aus Kondensator 20 und den Widerständen 18 und 19 bestehenden RC-Gliedes kann die Regeldynamik jeder spezifischen Aufgabe angepaßt werden. Jede Sollwert-Istwert-Abweichung wird also über den Summier-Integrator 12 kompensiert.

Die Ausgangsspannung des Summier-Integrators 12 wird über einen als Spannungswandler dienenden Widerstand 21 und einen Schaltkontakt eines Relais 22 an die Gegenelektrode 4 gelegt. Das Relais 22 ist über entsprechende Anschlußkontakte 22' an die Stromquelle angeschlossen. Normalerweise ist der Schaltkontakt des Relais 22 geschlossen. Er wird nur während der Titrationspause geöffnet, um unerwünschte Polarisationserscheinungen an der Gegenelektrode 4 und an der Arbeitselektrode 2 zu verhindern.

Die an die Gegenelektrode 4 über Widerstand 21 angelegte
Spannung ist so bemessen, daß der Potentialunterschied
zwischen Referenzelektrode 3 und Arbeitselektrode 2 der
am Widerstand 13 angelegten Sollwertspannung entspricht.
Diese Spannung beeinflußt somit den Strom zwischen Arbeitselektrode 2 und Gegenelektrode 4. Dieser Strom ruft in dem
Widerstand 21 einen Spannungsabfall hervor. Die am Widerstand 21 anstehenden Potentiale werden mit Hilfe der
beiden Impedanzwandler 23 und 24 getrennt erfaßt und über
Widerstände 25 und 26 an die Eingänge eines Differentiators
27 gelegt, mit dessen Hilfe diese Potentiale gegenüber
Erde gemessen und die Differenz dieser Potentiale gebildet
wird. Durch die Kondensatoren 29 und 30 wird das am Ausgang 31 des Differentiators 27 auftretende Signal geglättet. Durch das Verhältnis der Widerstände 32 und 33
gegenüber den Widerständen 25 und 26 wird die Verstärkung
des Ausgangssignales bestimmt. Das Ausgangssignal ist
proportional dem Strom zwischen Arbeitselektrode 2 und
Gegenelektrode 4.

Für die einwandfreie Funktion der Schaltung ist es von
wesentlicher Bedeutung, daß die Impedanz des Spannungswandlers 21 im Vergleich zur Impedanz des Elektrodensystems (Gegen-, Arbeits- und Referenzelektrode) klein ist.
Die Impedanzwandler 17, 23 und 24 dienen zur hochohmigen
Erfassung der entsprechenden Potentiale. Der bei 31 abgenommene Meßwert kann weiter für die Endpunkterkennung
der Titration verarbeitet werden.

Um eine komplette galvanische Trennung zwischen dem
Elektrodenmeßsystem und Masse bzw. Erde der Steuerung zu
erreichen, ist eine getrennte Stromversorgung 34 vorgesehen,
wie Figur 3 zeigt. Diese ist an sich bekannt und bildet
nicht den Gegenstand der vorliegenden Erfindung. Mit 35

0016414

-6-

sind die Anschlüsse für die anderen Geräte der Schaltung angedeutet. Sie führen zu einer zentralen Stromversorgung der Elektronik.


8 Patentansprüche

3 Figuren

0016414

79 P 7 9 0 7

Patentansprüche

1. Schaltungsanordnung für eine amperometrische Titration zur Bestimmung des Endpunktes, bei der der Strom zwischen einer Arbeits- und einer Gegenelektrode in Abhängigkeit vom Gesamtvolumen des in Volumeinheiten zugegebenen Titriermittels gemessen wird, wobei die Arbeitselektrode mit einer konstanten Polarisationsspannung gegen eine Referenzelektrode betrieben wird und zur Konstanthaltung der zwischen Arbeits- und Referenzelektrode vorgegebenen Polarisationsspannung ein Regelkreis vorgesehen ist, wobei eine vorgegebene Sollwertspannung mit der zwischen Arbeits- und Referenzelektrode erfaßten Istwertspannung verglichen wird, dadurch  g e k e n n z e i c h n e t  , daß die Sollwertspannung mit Hilfe eines Sollwertgebers (10) vorgegeben wird, die Istwertspannung mit Hilfe eines Impedanzwandlers hochohmig erfaßt wird und die Sollwert-Istwert-Abweichung über einen Summier-Integrator (12) kompensiert wird.

2. Schaltungsanordnung nach Anspruch 1, dadurch  g e - k e n n z e i c h n e t  , daß der Sollwertgeber (10) aus einem mit einer Zenerdiode (16) stabilisierten Spannungsteiler (13 - 15) besteht.

3. Schaltungsanordnung nach Anspruch 1, dadurch  g e - k e n n z e i c h n e t  , daß die Ausgangsspannung des Summier-Integrators (12) über einen als Spannungswandler dienenden Widerstand (21) an die Gegenelektrode (4) angelegt ist.

4. Schaltungsanordnung nach Anspruch 2, dadurch  g e - k e n n z e i c h n e t  , daß die Impedanz des Spannungswandlers im Vergleich zur Impedanz des Elektrodensystems (Gegen-, Arbeits- und Referenzelektrode) klein ist.

5. Schaltungsanordnung nach Anspruch 3 und 4, dadurch g e k e n n z e i c h n e t , daß die am Spannungswandler (21) auftretenden Potentiale hochohmig gemessen und die Potentialdifferenz mittels eines Differentiators (27) gebildet wird.

6. Schaltungsanordnung nach Anspruch 5, dadurch g e - k e n n z e i c h n e t , daß die Potentiale am Spannungswandler (21) mit Hilfe vom Impedanzwandler (23, 24) erfaßt werden.

7. Schaltungsanordnung nach einem der Ansprüche 1 bis 6, dadurch g e k e n n z e i c h n e t , daß für den Sollwertgeber (10), Istwertgeber (11), Summier-Integrator (12) eine getrennte Stromversorgung (34) vorgesehen ist.

8. Schaltungsanordnung nach einem der Ansprüche 1 bis 7, dadurch g e k e n n z e i c h n e t , daß der Stromkreis zwischen Arbeits- und Gegenelektrode (2 bzw. 4) unterbrechbar ist.

FIG 1

FIG2 2/2

FIG 3